(19) **Europäisches Patentamt European Patent Office Office européen des brevets**

(11) **EP 4 541 187 B1**

(12) **EUROPEAN PATENT SPECIFICATION**

(45) Date of publication and mention
of the grant of the patent:
**08.07.2026 Bulletin 2026/28**

(51) International Patent Classification (IPC):
*A01N 37/20* (2006.01)      *A01N 37/52* (2006.01)
*A01P 3/00* (2006.01)       *A01N 3/00* (2006.01)
*A01H 1/00* (2006.01)       *A01M 1/00* (2006.01)

(21) Application number: **24192964.5**

(22) Date of filing: **05.08.2024**

(52) Cooperative Patent Classification (CPC):
(C-Sets available)
**A01N 37/20; A01P 3/00**                    (Cont.)

(54) **USE OF SYNERGISTIC COMPOSITIONS BASED ON ZOXAMIDE AND CYFLUFENAMID AS FUNGICIDES IN THE AGRONOMIC FIELD**

VERWENDUNG VON SYNERGISTISCHEN ZUSAMMENSETZUNGEN AUF BASIS VON ZOXAMID UND CYFLUFENAMID ALS FUNGIZIDE IM AGRONOMISCHEN BEREICH

UTILISATION DE COMPOSITIONS SYNERGIQUES À BASE DE ZOXAMIDE ET DE CYFLUFÉNAMIDE COMME FONGICIDES DANS LE DOMAINE AGRONOMIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **04.08.2023 US 202318230488**

(43) Date of publication of application:
**23.04.2025 Bulletin 2025/17**

(73) Proprietor: **Gowan Crop Protection Limited Hertfordshire AL5 2JQ (GB)**

(72) Inventors:
• **ANAND, Kartik**
 **Yuma, AZ 85364 (US)**
• **DYER, Chad Douglas**
 **Olathe, KS 66062 (US)**
• **GUSMEROLI, Marilena**
 **Monza (MB) 20900 (IT)**
• **VENTURINI, Giovanni**
 **Cassano d'Adda (MI) 20062 (IT)**
• **VILLATA, Jessica**
 **Cameri (NO) 28062 (IT)**

(74) Representative: **Santarelli**
**Tour Trinity**
**1 bis Place de la Défense**
**92400 Courbevoie (FR)**

(56) References cited:
**WO-A1-2015/189110      WO-A1-2022/009154
CN-A- 103 999 865**

• **PAN XINGLU ET AL: "The application of chiral ultra-highperformance liquid chromatography tandem mass spectrometry to the separation of the zoxamide enantiomers and the study of enantioselective degradation process in agricultural plants", JOURNAL OF CHROMATOGRAPHY A, vol. 1525, 6 October 2017 (2017-10-06), pages 87 - 95, XP085274444, ISSN: 0021-9673, DOI: 10.1016/ J.CHROMA.2017.10.016**

Remarks:
The file contains technical information submitted after the application was filed and not included in this specification

(52) Cooperative Patent Classification (CPC): (Cont.)

C-Sets
**A01N 37/20, A01N 37/52**

**Description**

FIELD OF THE INVENTION

The present invention relates to a method for the control of phytopathogenic fungi in agricultural crops comprising applying compositions based on Zoxamide and Cyflufenamid on any part of the plant and/or plants to be protected or on the soil in which said plants grow.

BACKGROUND OF THE INVENTION

More specifically, said synergistic compositions can be used for the control and/or treatment of grey mildew on vines caused by *Botrytis cinerea,* white rot on lettuces and many other plants such as soybeans, sunflowers, rapeseed, tomatoes, leguminous plants, cucurbits (such as, for example, pumpkins, courgettes, cucumbers, melons, watermelons, etc.) caused by *Sclerotinia* spp. and apple-tree scab caused by *Venturia inaequalis.*

Zoxamide is a well-known foliar fungicide, with a preventive action, belonging to the benzamide family, discovered and developed by Rohm and Haas. The product is particularly effective against grape downy mildew (*Plasmopara viticola*), potato and tomato downy mildew (*Phytophthora infestans*) and cucumber downy mildew (*Pseudoperonospora cubensis*).

Cyflufenamid is also a well-known fungicide with a preventive action, belonging to the chemical class of starches, discovered and developed by the Japanese company Nippon Soda.

It is particularly active against powdery mildew, such as, for example, in apple trees (*Podosphaera leucotricha*), vines (*Erysiphe necator*), cucurbits (*Golovinomyces cichoracearum* and *Podosphaera xanthii*) and solanaceae (*Leveillula taurica*).

It is known that in the agronomic field, it is particularly advantageous to identify and use mixtures of products which exert a synergistic activity with each other in order to be able to broaden the characteristic spectrum of action of the single active ingredients, reduce the agronomic doses of application compared to the doses of use of the single active ingredients (and therefore lower the costs for application of the product) and/or reduce the risk of resistance, an increasingly widespread phenomenon in agriculture, which consists in a reduction in the sensitivity of a pathogen towards a specific active substance.

Chinese patent application CN103999865 claims a synergistic composition of Zoxamide and Cyflufenamid against foliar diseases such as powdery mildew and downy mildew. PAN XINGLU ET AL. ("The application of chiral ultra-highperformance liquid chromatography tandem mass spectrometry to the separation of the zoxamide enantiomers and the study of enantioselective degradation process in agricultural plants", JOURNAL OF CHROMATOGRAPHY A, vol. 1525, 6 October 2017 (2017-10-06), pages 87-95) teaches that zoxamide controls oomycetes but also several ascomycete fungi including *Venturia inaequalis* and *Botrytis cinerea.*

SUMMARY OF THE INVENTION

The Applicant has now identified a new and unexpected fungicidal biological activity of compositions comprising or consisting of Zoxamide and Cyflufenamid with respect to the typical biological activities of the two single active ingredients as it is exerted on different pathogens with respect to those claimed in CN103999865, such as soil fungi and rots which affect the roots and the collar of the plant. The document CN103999865, in fact, demonstrates the activity of mixtures of Zoxamide and Cyflufenamid against cucumber powdery mildew (a disease caused by *Golovinomyces cichoracearum* and *Podosphaera xanthii*) and brown spot of turf (caused by *Rhizoctonia solani*).

More specifically, the Applicant has surprisingly found that compositions comprising or consisting of Zoxamide and Cyflufenamid in a ratio of 500:1 to 1:100 exert a synergistic action against *Botrytis* spp., *Sclerotinia* spp. and *Venturia* spp. which attack crops of considerable agronomic interest, allowing, in agriculture, the use of said compositions on various crops and against pathogens that are not controlled or poorly controlled by the singles active ingredients with a reduction in the application doses and number of treatments (with consequent cost and time savings).

BRIEF DESCRIPTION OF FIGURES

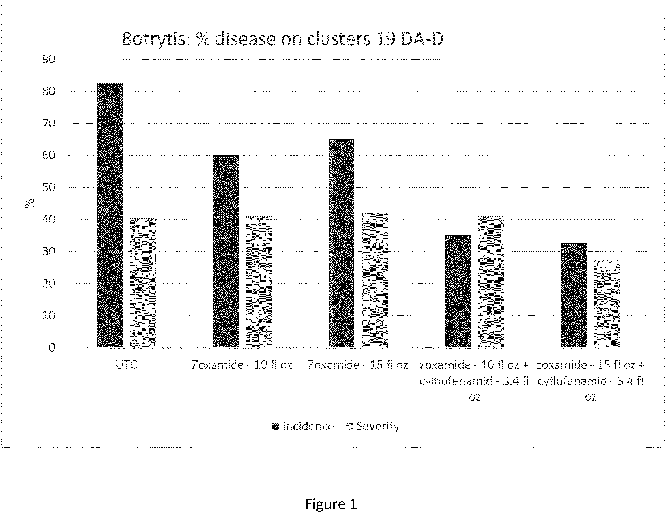

Figure 1 shows incidence and severity of botrytis in grape as described in Example 2.

DETAILED DESCRIPTION OF THE PREFERRED EMBODIMENT

The present invention therefore relates to a method for the control of phytopathogenic fungi in agricultural crops comprising applying a a fungicidal composition comprising or consisting of Zoxamide (A) and Cyflufenamid (B) on any part of the plant and/or plants to be protected or on the soil in which said plants grow wherein the weight ratio between component (A) and component (B) ranges from 500:1 to 1:100.

More preferably, in the above composition, the weight ratio between component (A) and component (B) ranges from 100:1 to 1:10.

Said compositions are in fact distinguished by an exceptional synergistic activity on phytopathogenic fung, wherein said pathogenic fungi are selected from the group consisting of:

- *Botrytis* spp., in particular *Botrytis cinerea* grey mildew agent of fruit such as berries and drupes, for example strawberries and grapes, vegetables such as lettuces, carrots, onions and cabbages, extensive crops such as rapeseed, forest and ornamental plants;
- *Sclerotinia* spp. mainly *Sclerotinia sclerotiorum* and *S. minor,* white rot agents of the stems on vegetables and extensive crops such as rapeseed, sunflowers and soybeans;
- *Venturia* spp. such as *Venturia inaequalis,* agent of apple-tree scab. The synergistic fungicidal composition according to the present invention is therefore used for the control and/or treatment of phytopathogenic fungi selected from *Botrytis* spp. (even more preferably *Botrytis cinerea*), *Sclerotinia* spp. (even more preferably *Sclerotinia minor*) and *Venturia* spp. (even more preferably *Venturia inaequalis*).

The main crops which can be protected with the compositions according to the present invention comprise cereals (such as wheat, barley, rye, oats, rice, corn, sorghum, etc.), fruit trees (such as apples, pears, plums, peaches, almonds, cherries, bananas, vines, strawberries, raspberries, blackberries, etc.), citrus fruits (such as oranges, lemons, mandarins, grapefruit, etc.), legumes (such as beans, peas, lentils, soybeans, etc.), vegetables (such as spinach, lettuces, asparagus, cabbages, carrots, onions, tomatoes, potatoes, aubergines, peppers, etc.), cucurbits (such as pumpkins, courgettes, cucumbers, melons, watermelons, etc..), oil plants (such as sunflowers, rapeseed, peanuts, castor-oil plants, coconut, etc.), tobacco, coffee, tea, cocoa, sugar beet, sugar cane, cotton.

The crops which can be protected with the compositions according to the present invention more preferably comprise grapevines (for example for the treatment of grey mildew caused by *Botrytis cinerea),* lettuces, soybeans, sunflowers, rapeseed, tomatoes, legumes (for example for the treatment of white rot caused by *Sclerotinia* spp.), pumpkins, courgettes, cucumbers, melons, watermelons and apple trees (e.g., for the treatment of scab caused by *Venturia inaequalis*).

The synergistic effect of the compositions comprising or consisting of Zoxamide (A) and Cyflufenamid (B), can be objectively assessed by applying the Colby formula ("Weeds", 1967, 15, pages 20-22):

$$E_t = E_A + E_B - (E_A \times E_B)/100$$

wherein Et is the percentage of effectiveness expected for the composition containing compounds (A) and (B) at doses $d_A$ + $d_B$, $E_A$ is the percentage of effectiveness observed for component (A) at doses $d_A$, $E_B$ is the percentage of effectiveness observed for component (B) at doses $d_B$.

When the effectiveness observed ($E_{A+B}$) for the mixture (A) + (B) is higher than the expected effectiveness according to the Colby formula ($E_{A+B}/E_t$ > 1), there is a synergistic effect.

Table 1 indicates specific examples of mixtures consisting of Zoxamide (A) and Cyflufenamid (B), particularly interesting for their synergistic activity.

Table 1:

| Composition nr. | Compounds | Ratio |
|---|---|---|
| 1 | Zoxamide : Cyflufenamid | 1:1 |
| 2 | Zoxamide : Cyflufenamid | 2:1 |
| 3 | Zoxamide : Cyflufenamid | 10 :1 |
| 4 | Zoxamide : Cyflufenamid | 20 :1 |
| 5 | Zoxamide : Cyflufenamid | 50 :1 |
| 6 | Zoxamide : Cyflufenamid | 100 :1 |
| 7 | Zoxamide : Cyflufenamid | 500 :1 |
| 8 | Zoxamide : Cyflufenamid | 1:5 |
| 9 | Zoxamide : Cyflufenamid | 1:10 |

(continued)

| Composition nr. | Compounds | Ratio |
|---|---|---|
| 10 | Zoxamide : Cyflufenamid | 1:100 |

The fungicidal use of synergistic compositions comprising or consisting of Zoxamide (A) and Cyflufenamid (B), object of the present invention, can be of the preventive or eradicating type and exhibits zero phytotoxicity on the crops treated.

The application of these synergistic compositions can take place on any part of the plant, for example on the leaves, stems, branches and fruit, or in the soil where the plant grows.

The total weight content of components (A) and (B) in said synergistic fungicidal composition can vary within a wide range; in general ranging from 1% to 90% by weight with respect to the total weight of the composition, preferably from 5 to 50% by weight with respect to the total weight of the composition.

The present invention therefore further relates to a method for the control of phytopathogenic fungi in agricultural crops, which comprises applying effective doses of a synergistic fungicidal composition comprising or consisting of Zoxamide (A) and Cyflufenamid (B).

The quantity of Zoxamide (A) and Cyflufenamid (B), as also the weight ratio of said components (A) and (B) to be applied for obtaining the desired effect, can vary according to various factors such as, for example, the crop to be preserved, the type of pathogen, the degree of infection, the climatic conditions, the method of application, the formulation adopted.

Total quantities of Zoxamide (A) and Cyflufenamid (B) ranging from 10 g to 5 kg per hectare of agricultural crop generally provide sufficient control.

For practical uses in agriculture, it is often preferable to use fungicidal compositions containing Zoxamide (A) and Cyflufenamid (B) and suitable excipients.

The present invention also relates to the use of fungicidal compositions comprising a synergistic fungicidal composition comprising or consisting of Zoxamide (A) and Cyflufenamid (B), a solid or liquid solvent and/or diluent and possibly a surfactant.

The above fungicidal compositions can be in the form of dry powders, wettable powders, emulsifiable concentrates, emulsions, microemulsions, suspoemulsions and suspensions in water or in oil, granules, water-dispersible granules, solutions, suspensions, etc.: the choice of the type of composition will depend on the specific use.

The fungicidal compositions are prepared in a known manner, for example by diluting or dissolving components (A) and (B) with a solvent medium and/or a solid or liquid diluent, optionally in the presence of surfactants.

The following can be used, for example, as solid diluents, or carriers: silica, kaolin, bentonite, talc, diatomaceous earth, dolomite, calcium carbonate, magnesia, gypsum, clays, synthetic silicates, attapulgite, sepiolite and mixtures thereof.

The following can be used, for example, as solvents or liquid diluents, in addition to water, aromatic organic solvents (xylenes or mixtures of alkylbenzenes, chlorobenzene, etc.), paraffins (petroleum fractions), alcohols (methanol, propanol, butanol, octanol, glycerine, etc.), esters (ethyl acetate, diisobutyl acetate, alkyl carbonates, alkyl esters of adipic acid, alkyl esters of glutaric acid, alkyl esters of succinic acid, alkyl esters of lactic acid, etc.), vegetable oils (rapeseed oil, sunflower oil, soybean oil, castor oil, corn oil, peanut oil, and their alkyl esters), ketones (cyclohexanone, acetone, acetophenone, isophorone, ethylamilketone, etc.), amides (N,N-dimethylalkylamides, N-methylpyrrolidone, etc.), sulfoxides and sulfones (dimethyl sulfoxide, dimethyl sulfone, etc.), and mixtures thereof.

Propellant gases such as butane, propane, halogenated hydrocarbons, nitrogen or carbon dioxide can be used as liquefied diluents or liquefied substances which gasify at room temperature and pressure.

The following can be used as surfactants: sodium, calcium, potassium, triethylamine or triethanolamine salts of alkylnaphthalenesulfonates, polynaphthalenesulfonates, alkylsulfonates, arylsulfonates, alkylarylsulfonates, polycarboxylates, sulfosuccinates, alkylsulfosuccinates, ligninsulfonates, alkylsulfates; and polyethoxylated fatty alcohols, polyethoxylated alkylphenols, polyethoxylated or polypropoxy-polyethoxylated arylphenols or polyethoxylated, polypropoxy-polyethoxylated sorbitol esters (block polymers) can also be used.

The fungicidal compositions can also contain special additives for particular purposes, for example antifreezes such as propylene glycol, or tackifiers such as Arabic gum, polyvinyl alcohol, polyvinylpyrrolidone, dispersants, for example lignin and its salts, cellulose derivatives or alginates, or stabilizers, for example antioxidants or ultraviolet absorbers.

Said fungicidal compositions can further comprise at least one active ingredient compatible with components (A) and (B) selected from: fungicides other than components (A) and (B), insecticides, plant-growth regulators, antibiotics, herbicides, fertilizers and/or mixtures thereof.

The concentration of the active substances (A) and (B) in the above compositions can vary within a wide range and depends on various factors. It varies according to the applications for which said compositions are intended, the environmental conditions and the type of formulation adopted. In general, the concentration of the active substances (A) and (B) varies from 1 to 90% by weight with respect to the total weight of the composition, preferably from 5 to 50% by weight.

The following examples are provided hereunder in order to better illustrate the invention and should be considered as being illustrative and non-limiting of the same.

EXAMPLE 1

**Determination of the *in vitro* antifungal synergistic activity of compositions of Zoxamide (A) and Cyflufenamid (B) against *Botrytis cinerea, Sclerotinia minor* and *Venturia inaequalis.***

Compositions consisting of the active ingredients Zoxamide (A) and Cyflufenamid (B) in different weight ratios were tested to evaluate their *in vitro* synergistic antifungal activity against the following phytopathogenic fungi: *Botrytis cinerea, Sclerotinia minor* and *Venturia inaequalis* by comparing them with the single active ingredients (A) and (B).

The strains in pure culture are kept and stored at 4°C in a refrigerator on potato dextrose agar (PDA) nutrient substrates. The fungal inoculum was prepared (which, depending on the species of the pathogen, could be a suspension of conidia or a mycelial homogenate) for carrying out the synergy assays.

For the strains not easily sporulating *in vitro,* i.e. *Sclerotinia minor* and *Venturia inaequalis,* six to eight pieces of mycelium, taken from actively growing cultures, are transferred into a grinding egg containing 6 ml of double-concentration potato dextrose broth (PDB). and some metal balls. The suspension is homogenized with a Pulverisette 23 mini-mill (Fritsch GmbH).

For the *in vitro* sporulating strain, i.e. *Botrytis cinerea,* the conidic suspension was prepared starting from a culture grown on PDA after 4-5 days of incubation in a thermostat at 24°C to stimulate its sporulation. The conidia were collected in 1 mL of double-concentration PDB and counted under a microscope with a counting chamber to obtain a final inoculum of $4 \times 10^4$ conidia/mL.

In the compositions tested, the weight ratios of Zoxamide (A) with respect to Cyflufenamid (B) range from 500:1 to 1:100. For both molecules tested, a stock solution in dimethyl sulfoxide (DMSO) at 160,000 mg/l was prepared which was then serially diluted in sterile demineralized water to obtain the solutions to be tested at concentrations double with respect to the final doses. More specifically, the compositions of the two fungicide molecules (A) and (B) were tested following a checkerboard matrix in order to have, in this way, all possible combinations of the two fungicides within the weight ratios described above.

Table 2 indicates an example of a checkerboard scheme with the matrix of some possible dose combinations of the two fungicides Zoxamide (A) and Cyflufenamid (B).

Table 2

| Zoxamide (A) (mg/l) | 100 | 100 | 100 | 100 | 100 | 100 | |
|---|---|---|---|---|---|---|---|
| Cyflufenamid /B) (mg/l) | 100 | 50 | 10 | 5 | 1 | 0.1 | |
| Zoxamide (A) (mg/l) | 50 | 50 | 50 | 50 | 50 | 50 | |
| Cyflufenamid (B) (mg/l) | 100 | 50 | 10 | 5 | 1 | 0.1 | |
| Zoxamide (A) (mg/l) | 10 | 10 | 10 | 10 | 10 | 10 | **compositions (mg/l)** |
| Cyflufenamid (B) (mg/l) | 100 | 50 | 10 | 5 | 1 | 0.1 | |
| Zoxamide (A) (mg/l) | 5 | 5 | 5 | 5 | 5 | 5 | |
| Cyflufenamid (B) (mg/l)) | 100 | 50 | 10 | 5 | 1 | 0.1 | |
| Zoxamide (A) (mg/l) | 1 | 1 | 1 | 1 | 1 | 1 | |
| Cyflufenamid (B) (mg/l) | 100 | 50 | 10 | 5 | 1 | 0.1 | |

Synergy assays were performed in 96-well plates: 50 μl of inoculum were mixed with 50 μl of solution of the compositions consisting of the two active molecules (A) and (B) in each well using the Eppendorf Multipette® System E3 serial dispenser.

Three wells were used as replicates for each concentration/active ingredient composition.

All pathogen strains were grown in untreated control wells containing 50 μl of fungal suspension and 50 μl of sterile demineralized water. The inoculated multiwell plates are incubated at 22°C for 72 hours or 96 or 120 depending on the type of pathogen.

The sensitivity to the molecules was evaluated as growth inhibition of the fungus and measured in terms of absorbance immediately before and after the incubation period.

The absorbance was measured for each well using the Infinite® F50 Absorbance Reader (Tecan Group Ltd) spectrophotometer at 405 nm (for mycelial inoculums) and at 492 nm (for conidic inoculums).

For each strain, the percentage of growth inhibition (GIP) caused by each of the active-ingredient concentrations was calculated using the following formula:

$$GIP = \frac{\left[\left(A_{t72-120} - A_{t0}\right)_{untreated}\right] - \left[\left(A_{t72-120} - A_{t0}\right)_{treated}\right]}{\left(A_{t72-120} - A_{t0}\right)_{untreated}} X100$$

wherein $At_{72-120}$ and $At_0$ are respectively the absorbances of the treated well and of the untreated control measured at the end and at the beginning of the incubation period. GIP data were used for calculating the potential synergistic effect of the compositions tested using the formula proposed by Colby (1967):

$$GIP_t = GIP_a + GIP_b - (GIP_a \times GIP_b /100)$$

wherein:

GIPt = GIP expected of the active molecule A and B tested at dose p for molecule A and dose q for molecule B;
$GIP_a$ = GIP expected from the molecule A tested at dose p;
$GIP_b$ = GIP expected from the molecule B tested at dose q.

The synergistic effect of the two molecules is indicated when the effectiveness of the mixed combination of A + B ($GIP_a + GIP_b$), is higher than the expected effectiveness calculated with the Colby equation ($GIP_{a+b}/GIP_t > 1$), as described in literature in Colby, S. R. (1967); "Calculating synergistic and antagonistic responses of herbicide combinations", Weeds, 15(1), pages 20-22.

In particular, an analysis was effected of the compositions Nr. 1-10 indicated in Table 1. Said compositions are in fact representative of the weight ratios between the two components (A) and (B) previously indicated.

Table 3 indicates the results obtained by carrying out the test described against *Botrytis cinerea* with compositions Nr. 1, 2, 3, 4, 5, 6, 7, 8, 9 and 10, with the reference composition (100 mg/l of Zoxamide (A) and 0.1 mg/l of Cyflufenamid (B)) and with Zoxamide (A) and Cyflufenamid (B) as single active ingredients, expressed as growth-inhibition percentage (GIP) and calculated according to the Colby equation. As can be seen from the data in Table 3, the synergistic effect between the two components (A) and (B) with respect to *Botrytis cinerea* is observed in all compositions Nr. 1-10.

Table 3

| Compound | Dose (mg/l) | Effect A, Effect B (GIP) | Effect Mix tested (GIP a+b) | Synergistic ratio according to Colby (GIP a+b/ GIP$_t$) |
|---|---|---|---|---|
| Zoxamide (A) | 100 | 56.9 | - | |
| Cyflufenamid (B) | 100 | 60.2 | - | |
| Composition nr. 1 (A+B) | 100+100 | GIP$_t$ 82.8 | 87.8 | 1.06 |
| Zoxamide (A) | 100 | 56.9 | - | |
| Cyflufenamid (B) | 50 | 49.4 | - | |
| Composition nr. 2 (A+B) | 100+50 | GIP$_t$ 78.2 | 93.2 | 1.21 |
| Zoxamide (A) | 10 | 31.2 | - | |
| Cyflufenamid (B) | 1 | 4.3 | - | |
| Composition nr. 3 (A+B) | 10+1 | GIP$_t$ 34.2 | 39.6 | 1.16 |
| Zoxamide (A) | 100 | 56.9 | - | |
| Cyflufenamid (B) | 5 | 10.6 | - | |
| Composition nr. 4 (A+B) | 100+5 | GIP$_t$ 61.5 | 62.9 | 1.02 |
| Zoxamide (A) | 50 | 47.3 | - | |

(continued)

| Compound | Dose (mg/l) | Effect A, Effect B (GIP) | Effect Mix tested (GIP a+b) | Synergistic ratio according to Colby (GIP a+b/ $GIP_t$) |
|---|---|---|---|---|
| Cyflufenamid (B) | 1 | 4.3 | - | |
| Composition nr. 5 (A+B) | 50+1 | $GIP_t$ 49.5 | 51.7 | 1.05 |
| Zoxamide (A) | 100 | 56.9 | - | |
| Cyflufenamid (B) | 1 | 4.3 | - | |
| Composition nr. 6 (A+B) | 100+1 | $GIP_t$ 58.7 | 77.5 | 1.32 |
| Zoxamide (A) | 50 | 47.3 | - | |
| Cyflufenamid (B) | 0.1 | 1.7 | - | |
| Composition nr. 7 (A+B) | 50+0.1 | $GIP_t$ 48.2 | 52.1 | 1.08 |
| Zoxamide (A) | 10 | 31.2 | - | |
| Cyflufenamid (B) | 50 | 49.4 | - | |
| Composition nr. 8 (A+B) | 10+50 | $GIP_t$ 65.2 | 72.4 | 1.11 |
| Zoxamide (A) | 10 | 31.2 | - | |
| Cyflufenamid (B) | 100 | 60.2 | - | |
| Composition nr. 9 (A+B) | 10+100 | $GIP_t$ 72.6 | 82.1 | 1.15 |
| Zoxamide (A) | 1 | 5.6 | - | |
| Cyflufenamid (B) | 100 | 60.2 | - | |
| Composition nr. 10 (A+B) | 1+100 | $GIP_t$ 62.4 | 63.1 | 1.01 |
| Zoxamide (A) | 100 | 56.9 | - | |
| Cyflufenamid (B) | 0.1 | 1.7 | - | |
| Reference composition (A+B) | 100+0.1 | $GIP_t$ 57.6 | 49.5 | 0.86 |

Table 4 indicates the results obtained by carrying out the test described against *Sclerotinia minor* with compositions Nr. 1, 2, 3, 4, 5, 6, 7, 8, 9 and 10, with the reference composition (100 mg/l of Zoxamide (A) and 0.1 mg/l of Cyflufenamid (B)) and with Zoxamide (A) and Cyflufenamid (B) as single active ingredients, expressed as growth-inhibition percentage (GIP) and calculated according to the Colby equation. As can be seen from the data in Table 4, the synergistic effect between the two components (A) and (B) with respect to *Sclerotinia minor* is observed in all compositions Nr. 1-10.

Table 4

| Compound | Dose (mg/l) | Effect A, Effect B (GIP) | Effect Mix tested (GIP a+b) | Synergistic ratio according to Colby (GIP a+b/ $GIP_t$ |
|---|---|---|---|---|
| Zoxamide (A) | 10 | 37.6 | - | |
| Cyflufenamid (B) | 10 | 23.4 | - | |
| Composition nr.1 (A+B) | 10+10 | $GIP_t$ 52.2 | 93.2 | 1.78 |
| Zoxamide (A) | 10 | 37.6 | - | |
| Cyflufenamid (B) | 5 | 17.8 | - | |
| Composition nr.2 (A+B) | 10+5 | $GIP_t$ 48.7 | 67.1 | 1.38 |
| Zoxamide (A) | 10 | 37.6 | - | |
| Cyflufenamid (B) | 1 | 10.2 | - | |
| Composition nr.3 (A+B) | 10+1 | $GIP_t$ 43.9 | 44.4 | 1.02 |
| Zoxamide (A) | 100 | 70.3 | - | |
| Cyflufenamid (B) | 5 | 17.8 | - | |
| Composition nr.4 (A+B) | 100+5 | $GIP_t$ 75.6 | 77.8 | 1.03 |
| Zoxamide (A) | 50 | 58.2 | - | |

(continued)

| Compound | Dose (mg/l) | Effect A, Effect B (GIP) | Effect Mix tested (GIP a+b) | Synergistic ratio according to Colby (GIP a+b/ $GIP_t$ |
|---|---|---|---|---|
| Cyflufenamid (B) | 1 | 10.2 | - | |
| Composition nr.5 (A+B) | 50+1 | $GIP_t$ 62.5 | 66.8 | 1.07 |
| Zoxamide (A) | 10 | 37.6 | - | |
| Cyflufenamid (B) | 0.1 | 3.7 | - | |
| Composition nr.6 (A+B) | 10+0.1 | $GIP_t$ 39.9 | 43.1 | 1.08 |
| Zoxamide (A) | 1 | 29.1 | - | |
| Cyflufenamid (B) | 5 | 17.8 | - | |
| Composition nr.7 (A+B) | 1+5 | $GIP_t$ 48.8 | 69.5 | 1.42 |
| Zoxamide (A) | 1 | 29.1 | - | |
| Cyflufenamid (B) | 10 | 23.4 | - | |
| Composition nr. (A+B) | 1+10 | $GIP_t$ 50.5 | 79.2 | 1.69 |
| Zoxamide (A) | 50 | 58.2 | - | |
| Cyflufenamid (B) | 0.1 | 3.7 | - | |
| Composition nr.9 (A+B) | 50+0.1 | $GIP_t$ 59.7 | 60.9 | 1.02 |
| Zoxamide (A) | 0.1 | 2.5 | - | |
| Cyflufenamid (B) | 10 | 23.4 | - | |
| Composition nr.10 (A+B) | 0.1+10 | $GIP_t$ 25.3 | 27.8 | 1.10 |
| Zoxamide (A) | 100 | 70.3 | - | |
| Cyflufenamid (B) | 0.1 | 3.7 | - | |
| Reference composition (A+B) | 100+0.1 | $GIP_t$ 71.4 | 57.8 | 0.81 |

Table 5 indicates the results obtained by carrying out the test described against *Venturia inaequalis* with compositions Nr. 1, 2, 3, 4, 5, 6, 7, 8, 9 and 10, with the reference composition (100 mg/l of Zoxamide (A) and 0.1 mg/l of Cyflufenamid (B)) and with Zoxamide (A) and Cyflufenamid (B) as single active ingredients, expressed as growth-inhibition percentage (GIP) and calculated according to the Colby equation. As can be seen from the data in Table 5, the synergistic effect between the two components (A) and (B) with respect to *Venturia inaequalis* is observed in all compositions Nr. 1-10.

Table 5

| Compound | Dose (mg/l) | Effect A, Effect B (GIP) | Effect Mix tested (GIP a+b) | Synergistic ratio according to Colby (GIP a+b/ $GIP_t$ |
|---|---|---|---|---|
| Zoxamide (A) | 1 | 78.0 | - | |
| Cyflufenamid (B) | 1 | 5.5 | - | |
| Composition nr.1 (A+B) | 1+1 | $GIP_t$ 79.2 | 95.0 | 1.19 |
| Zoxamide (A) | 100 | 84.5 | - | |
| Cyflufenamid (B) | 50 | 15.2 | - | |
| Composition nr.2 (A+B) | 100+50 | $GIP_t$ 86.8 | 87.8 | 1.01 |
| Zoxamide (A) | 100 | 84.5 | - | |
| Cyflufenamid (B) | 10 | 12.7 | - | |
| Composition nr.3 (A+B) | 100+10 | $GIP_t$ 86.4 | 94.3 | 1.09 |
| Zoxamide (A) | 100 | 84.5 | - | |
| Cyflufenamid (B) | 5 | 10.3 | - | |
| Composition nr.4 (A+B) | 100+5 | $GIP_t$ 86.1 | 91.3 | 1.06 |
| Zoxamide (A) | 5 | 78.8 | - | |

(continued)

| Compound | Dose (mg/l) | Effect A, Effect B (GIP) | Effect Mix tested (GIP a+b) | Synergistic ratio according to Colby (GIP a+b/ $GIP_t$ |
|---|---|---|---|---|
| Cyflufenamid (B) | 0.1 | 1.2 | - | |
| Composition nr.5 (A+B) | 5+0.1 | $GIP_t$ 79.1 | 83.0 | 1.05 |
| Zoxamide (A) | 100 | 84.0 | - | |
| Cyflufenamid (B) | 1 | 5.5 | - | |
| Composition nr.6 (A+B) | 100+1 | $GIP_t$ 84.8 | 96.0 | 1.13 |
| Zoxamide (A) | 50 | 80.1 | - | |
| Cyflufenamid (B) | 0.1 | 1.2 | - | |
| Composition nr.7 (A+B) | 50+0.1 | $GIP_t$ 80.3 | 81.1 | 1.01 |
| Zoxamide (A) | 10 | 80.0 | - | |
| Cyflufenamid (B) | 50 | 12.7 | - | |
| Composition nr.8 (A+B) | 10+50 | $GIP_t$ 82.5 | 86.7 | 1.09 |
| Zoxamide (A) | 10 | 80.0 | - | |
| Cyflufenamid (B) | 100 | 18.3 | - | |
| Composition nr.9 (A+B) | 10+100 | $GIP_t$ 83.6 | 87.8 | 1.05 |
| Zoxamide (A) | 1 | 78.0 | - | |
| Cyflufenamid (B) | 100 | 18.0 | - | |
| Composition nr.10 (A+B) | 1+100 | $GIP_t$ 81.9 | 88.0 | 1.08 |
| Zoxamide (A) | 100 | 84.5 | | |
| Cyflufenamid (B) | 0.1 | 1.2 | | |
| Reference composition (A+B) | 100+0.1 | GIPt 84.6 | 63.7 | 0.75 |

EXAMPLE 2

**Field study on compositions of Zoxamide (A) and Cyflufenamid (B) against *Botrytis cinerea* in grapes**

A field trial was performed to evaluate the composition of zoxamide and cyflufenamid for the control of *Botrytis cinerea* on grape (Carignan, 21 year old). The following treatments were applied (rates are per acre):

- No treatment composition (UTC)
- Composition including 10 fl oz zoxamide
- Composition including 15 fl oz zoxamide
- Composition including zoxamide (10 fl oz) and cyflufenamid (3.4 fl oz)
- Composition including zoxamide (15 fl oz) and cyflufenamid (3.4 fl oz)

Application times were:

(A) -5/10 bloom, 50%
(B) - 6/14 bunch close
(C) - 7/28 veraison
(D) - 8/12 3 weeks pre-harvest.

Figure 1 shows the incidence and severity of botrytis at 19 DA-D. As seen in Figure 1, all treatments showed reduced disease incidence relative to the UTC, with good control seen for the zoxamide and cyflufenamid compositions. No phytotoxicity was observed in any treatments based upon several (20) evaluations throughout the duration of the study.

## Claims

1. A method for the control of phytopathogenic fungi in agricultural crops comprising applying at least one effective and non-phytotoxic dose of a synergistic fungicidal composition comprising Zoxamide (A) and Cyflufenamid (B) on any part of the plant and/or plants to be protected or on the soil in which said plants grow, wherein the weight ratio of (A) with respect to (B) ranges from 500:1 to 1:100;
   wherein said pathogenic fungi are selected from the group consisting of *Botrytis spp., Sclerotinia spp.* and *Venturia spp.*

2. A method according to claim 1, wherein the weight ratio of (A) with respect to (B) ranges from 100:1 to 1:10.

3. A method according to claim 1 or 2, wherein said pathogenic fungi are selected from the group consisting of *Botrytis cinerea, Sclerotinia minor* and *Venturia inaequalis.*

4. A method according to claim 1 or 2, wherein said synergistic fungicidal composition further comprises a solid or liquid solvent and/or diluent and optionally a surfactant.

5. A method according to claim 1 or 2, wherein said synergistic fungicidal composition further comprises at least one active ingredient compatible with components (A) and (B) selected from the group consisting of: fungicides other than components (A) and (B), insecticides, plant-growth regulators, antibiotics, herbicides, fertilizers and/or mixtures thereof.

6. A method according to any one of claims 1 to 3, wherein the agricultural crops are selected from the group consisting of: cereals, fruit trees, citrus fruits, legumes, vegetables, cucurbits, oil plants, tobacco, coffee, tea, cocoa, sugar beet, sugar cane, and cotton.

7. A method according to claim 1 or 2, wherein the agricultural crops are selected from the group consisting of: wheat, barley, rye, oats, rice, corn, apples, pears, plums, peaches, almonds, cherries, bananas, vines, strawberries, raspberries, blackberries, oranges, lemons, mandarins, grapefruit, beans, peas, lentils, soybeans, spinach, lettuces, asparagus, cabbage, carrots, onions, tomatoes, potatoes, aubergines, peppers, pumpkins, courgettes, cucumbers, melons, watermelons, sunflowers, rapeseed, peanuts, castor-oil plants, and coconut.

8. A method according to claim 1 or 2, wherein the agricultural crops are selected from the group consisting of: vines, lettuces, soybeans, sunflowers, rapeseed, tomatoes, legumes, pumpkins, courgettes, cucumbers, melons, watermelons and apple trees.

## Patentansprüche

1. Verfahren zur Bekämpfung phytopathogener Pilze in landwirtschaftlichen Kulturpflanzen, umfassend das Auftragen von mindestens einer wirksamen und nicht phytotoxischen Dosis einer synergistischen fungiziden Zusammensetzung, umfassend Zoxamid (A) und Cyflufenamid (B) auf einen Teil der zu schützenden Pflanze und/oder Pflanzen oder auf den Boden, in dem diese Pflanzen wachsen, wobei das Gewichtsverhältnis von (A) in Bezug auf (B) zwischen 500:1 und 1:100 liegt;
   wobei die pathogenen Pilze aus der Gruppe ausgewählt werden, bestehend aus *Botrytis spp., Sclerotinia spp. und Venturia spp.*

2. Verfahren nach Anspruch 1, wobei das Gewichtsverhältnis von (A) in Bezug auf (B) zwischen 100:1 und 1:10 liegt.

3. Verfahren nach Anspruch 1 oder 2, wobei die pathogenen Pilze aus der Gruppe ausgewählt werden, bestehend aus *Botrytis cinerea, Sclerotinia minor* und *Venturia inaequalis.*

4. Verfahren nach Anspruch 1 oder 2, wobei die synergistische fungizide Zusammensetzung weiter ein festes oder flüssiges Lösungsmittel und/oder Verdünnungsmittel und optional ein Tensid umfasst.

5. Verfahren nach Anspruch 1 oder 2, wobei die synergistische fungizide Zusammensetzung weiter mindestens einen mit den Komponenten (A) und (B) kompatiblen Wirkstoff umfasst, der aus der Gruppe ausgewählt ist, bestehend aus: Fungiziden außer den Komponenten (A) und (B), Insektiziden, Pflanzenwachstumsregulatoren, Antibiotika, Herbiziden, Düngemitteln und/oder Mischungen davon.

6. Verfahren nach einem der Ansprüche 1 bis 3, wobei die landwirtschaftlichen Kulturpflanzen aus der Gruppe ausgewählt werden, bestehend aus: Getreide, Obstbäumen, Zitrusfrüchten, Hülsenfrüchte, Gemüse, Kürbisgewächse, Ölpflanzen, Tabak, Kaffee, Tee, Kakao, Zuckerrübe, Zuckerrohr und Baumwolle.

7. Verfahren nach Anspruch 1 oder 2, wobei die landwirtschaftlichen Kulturpflanzen aus der Gruppe ausgewählt werden, bestehend aus: Weizen, Gerste, Roggen, Hafer, Reis, Mais, Äpfeln, Birnen, Pflaumen, Pfirsich, Mandeln, Kirschen, Bananen, Weinreben, Erdbeeren, Himbeeren, Brombeeren, Orangen, Zitronen, Mandarinen, Grapefruit, Bohnen, Erbsen, Linsen, Sojabohnen, Spinat, Salat, Spargel, Kohl, Karotten, Zwiebeln, Tomaten, Kartoffeln, Auberginen, Paprika, Kürbissen, Zucchini, Gurken, Melonen, Wassermelonen, Sonnenblumen, Raps, Erdnüssen, Rizinusölpflanzen, und Kokosnuss.

8. Verfahren nach Anspruch 1 oder 2, wobei die landwirtschaftlichen Kulturpflanzen aus der Gruppe ausgewählt werden, bestehend aus: Weinreben, Salat, Sojabohnen, Sonnenblumen, Raps, Tomaten, Hülsenfrüchten, Kürbissen, Zucchini, Gurken, Melonen, Wassermelonen und Apfelbäumen.

**Revendications**

1. Procédé de lutte contre des champignons phytopathogènes dans des cultures agricoles comportant l'application d'au moins une dose efficace et non phytotoxique d'une composition fongicide synergique comportant du Zoxamide (A) et du Cyflufénamide (B) sur toute partie de la plante et/ou des plantes à protéger ou sur le sol dans lequel poussent lesdites plantes, dans lequel le rapport pondéral de (A) par rapport à (B) va de 500:1 à 1:100 ;
dans lequel lesdits champignons pathogènes sont sélectionnés dans le groupe consistant en *Botrytis spp., Sclerotinia spp. et Venturia spp.*

2. Procédé selon la revendication 1, dans lequel le rapport pondéral de (A) par rapport à (B) va de 100:1 à 1:10.

3. Procédé selon la revendication 1 ou 2, dans lequel lesdits champignons pathogènes sont sélectionnés dans le groupe consistant en *Botrytis cinerea, Sclerotinia minor* et *Venturia inaequalis.*

4. Procédé selon la revendication 1 ou 2, dans lequel ladite composition fongicide synergique comporte en outre un solvant et/ou un diluant solide ou liquide et éventuellement un tensioactif.

5. Procédé selon la revendication 1 ou 2, dans lequel ladite composition fongicide synergique comporte en outre au moins une substance active compatible avec les composants (A) et (B), sélectionnée dans le groupe consistant en : des fongicides autres que les composants (A) et (B), des insecticides, des régulateurs de croissance végétale, des antibiotiques, des herbicides, des engrais et/ou des mélanges de ceux-ci.

6. Procédé selon l'une quelconque des revendications 1 à 3, dans lequel les cultures agricoles sont sélectionnées dans le groupe consistant en : les céréales, les arbres fruitiers, les agrumes, les légumineuses, les légumes, les cucurbitacées, les plantes oléagineuses, le tabac, le café, le thé, le cacao, la betterave à sucre, la canne à sucre et le coton.

7. Procédé selon la revendication 1 ou 2, dans lequel les cultures agricoles sont sélectionnées dans le groupe consistant en : blé, orge, seigle, avoine, riz, maïs, pommes, poires, prunes, pêches, amandes, cerises, bananes, vignes, fraises, framboises, mûres, oranges, citrons, mandarines, pamplemousse, haricots, pois, lentilles, soja, épinard, laitues, asperges, choux, carottes, oignons, tomates, pommes de terre, aubergines, poivrons, citrouilles, courgettes, concombres, melons, pastèques, tournesols, colza, cacahuètes, ricin et noix de coco.

8. Procédé selon la revendication 1 ou 2, dans lequel les cultures agricoles sont sélectionnées dans le groupe consistant en : vignes, laitues, soja, tournesols, colza, tomates, légumineuses, citrouilles, courgettes, concombres, melons, pastèques et pommiers.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103999865

**Non-patent literature cited in the description**

- **PAN XINGLU et al.** The application of chiral ultra-highperformance liquid chromatography tandem mass spectrometry to the separation of the zoxamide enantiomers and the study of enantioselective degradation process in agricultural plants. *JOURNAL OF CHROMATOGRAPHY A*, 06 October 2017, vol. 1525, 87-95
- *Weeds*, 1967, vol. 15, 20-22
- **COLBY, S. R**. Calculating synergistic and antagonistic responses of herbicide combinations. *Weeds*, 1967, vol. 15 (1), 20-22